# DEMANDE DE BREVET EUROPEEN

(11) **EP 2 722 688 A2**
(43) Date de publication de la demande: **23.04.2014**
(21) Numéro de dépôt: 13189539.3
(22) Date de dépôt: 21.10.2013
(51) Int. Cl.: G01T 1/20

(54) **Dispositif de caractérisation d'un rayonnement ionisant**

(30) Priorité: 22.10.2012 FR 1260024
(71) Demandeur: Commissariat à l'Énergie Atomique et aux Énergies Alternatives, 75015 Paris (FR)
(72) Inventeur: Reboud, Vincent, 75013 PARIS (FR); Landis, Stefan, 38500 VOIRON (FR)
(74) Mandataire: Domenego, Bertrand

(57) **Abrégé**

L'invention propose un dispositif (10) de caractérisation d'un rayonnement ionisant utilisé dans un milieu ambiant présentant un premier indice de réfraction (n₁), le dispositif (10) comprenant :
- un matériau scintillateur (12) délimité par une paroi (28), le matériau scintillateur (12) générant des photons sous l'effet d'un rayonnement ionisant, le matériau scintillateur (12) présentant un deuxième indice de réfraction (n₂), et
- une couche de guidage (16) en contact avec au moins une partie de la paroi (28), la couche de guidage (16) guidant vers une zone prédéterminée les photons générés par le matériau scintillateur (12) et ayant un angle d'incidence par rapport à la partie de la paroi (28) supérieur ou égal à l'arcsinus du rapport du premier indice de réfraction (n₁) sur le deuxième indice de réfraction (n₂).

## Description

La présente invention concerne un dispositif de caractérisation d'un rayonnement ionisant. L'invention se rapporte également à un procédé de fabrication du dispositif et à l'utilisation du dispositif pour la caractérisation d'un rayonnement ionisant.

Un rayonnement ionisant, dans le cadre de l'invention, est un rayonnement de particules de hautes énergies (radiations Gamma, rayons ionisants ou simplement évènements). Le rayonnement ionisant est par exemple un rayonnement de type X ou gamma, un faisceau d'électrons, un faisceau de particules chargées ou un faisceau de particules neutres.

La caractérisation d'un tel rayonnement trouve son application dans différents domaines comme la radiologie, la physique, la physiologie, la chimie ou encore l'exploration minière et pétrolière. A titre d'exemple, des tomographies par émission de positrons (aussi désignées par l'acronyme PET) et la caractérisation des rayonnements cosmiques sont des applications.

Pour cela, il est connu d'utiliser un matériau scintillateur. Ce matériau est un matériau organique ou cristallin, qui émet des photons (parfois appelés photons de scintillation) sous l'effet d'un rayonnement ionisant.

L'interaction entre le matériau scintillateur et le rayonnement ionisant constitue un événement ionisant. Cet événement conduit à la formation de photons via un effet photoélectrique ou une diffusion inélastique Compton. Selon les cas, l'effet photoélectrique ou la diffusion inélastique Compton prédominent.

Les photons générés par le matériau scintillateur sont caractérisés par la position de leur lieu de création et leur énergie. Déterminer la position du lieu de création revient à connaître la position de l'interaction entre le rayonnement ionisant et le matériau scintillateur. Cette connaissance permet de connaître la direction du rayonnement, et donc d'obtenir une estimation de la localisation de la source du rayonnement ionisant. L'énergie des photons permet d'avoir accès à l'énergie du rayonnement ionisant incident.

Ainsi, pour certaines applications, seule la position de l'interaction est recherchée. Celle-ci est obtenue grâce à une bonne résolution spatiale du dispositif de mesure. La position de l'évènement ionisant est déterminée en calculant par exemple le barycentre de la position des photons visibles détectés par le dispositif de mesure.

Pour favoriser la détermination du point d'interaction, il est connu de peindre le matériau scintillateur en noir ainsi que l'indique l'article de G. Llosà et. al dont le titre est « Characterization of a pet detector head based on continuous lyso crystals and monolithic, 64-pixel silicon photomultiplier matrices » et qui a été publié dans la revue Phys. Med. Biol., 2010, volume 55 en pages 7299-7315. Les photons devant subir une réflexion qui leur ferait perdre l'information du positionnement sont ainsi absorbés par la couche en noir. Ainsi, seuls les photons n'ayant pas subi de réflexion sont détectés et participent à la détermination précise de la position de l'évènement.

Mais, le nombre de photons collectés par le dispositif est faible, ce qui rend la détermination de l'énergie par ce dispositif peu précise.

En effet, dans le cas où c'est l'énergie qui est mesurée, pour des raisons de statistique, plus le nombre de photons collectés est élevé, plus l'estimation de l'énergie est précise.

Pour augmenter le nombre de photons collectés, l'article de G. Llosà et. al propose de peindre le matériau scintillateur en blanc. Le nombre de photons sortant du matériau scintillateur est, en effet, augmenté dans cette configuration, mais la détermination de la position de l'évènement est détériorée, car des photons ayant subi au moins une réflexion dans le scintillateur sont détectés.

Il est également connu d'utiliser des cristaux photoniques pour extraire une quantité supérieure de photons. Cette idée est décrite dans l'article d'Arno Knapitsch et al. dont le titre est "Photonic crystals: A novel approach to enhance the light output of scintillation based detectors" et qui a été publié dans le journal Nuclear Instruments & Methods in Physics Research Section A-accelerators Spectrometers Detectors and Associated Equipment - NUCL INSTRUM METH PHYS RES A , vol. 628, no. 1, 2011 aux pages 385 à 388. L'emploi de cristaux photoniques dans le contexte des matériaux scintillateurs est aussi décrit dans l'article de M. Kronberger et al. dont le titre est « Improving Light Extraction From Heavy Inorganic Scintillators by Photonic Crystals » et qui a été publié dans le journal Nuclear Science, IEEE Transactions on Volume: 57 , Issue: 5 , Part: 1, 2012 aux pages 2475 à 2482.

Toutefois, il existe de fortes variations du diagramme angulaire d'émission des photons diffractés à travers les cristaux photoniques en fonction de la longueur d'onde des photons générés par le matériau scintillateur. Ceci limite la précision qui peut être obtenue dans la détermination de la position de l'interaction entre le rayonnement ionisant et le matériau scintillateur.

Le document WO-A-2010/109344 propose de combiner l'emploi de cristaux photoniques avec des matériaux présentant un indice optique inférieur à 1 pour améliorer l'efficacité de capture et d'extraction des photons générés par le matériau scintillateur.

Mais, dans le système du document WO-A-2010/109344, les photons collectés subissent au moins une réflexion totale ou une diffraction, ce qui leur fait perdre l'information sur le point d'interaction. Cette partie de photons détectés génère alors un agrandissement et une déformation de la tâche d'émission (ce phénomène est généralement appelé sous sa dénomination anglaise de photon spreading) sur le photodétecteur causant des erreurs sur la détermination de la position d'interaction de l'évènement dans le matériau scintillateur.

Ainsi, les dispositifs précédemment décrits donnent seulement accès à l'une des deux informations de façon précise (position de l'interaction ou énergie).

Il existe donc besoin pour un dispositif de caractérisation d'un rayonnement ionisant permettant d'obtenir à la fois une caractérisation précise en énergie et en position.

A cet effet, il est proposé un dispositif de caractérisation d'un rayonnement ionisant utilisé dans un milieu ambiant présentant un premier indice de réfraction. Le dispositif comprend un matériau scintillateur délimité par une paroi, le matériau scintillateur générant des photons sous l'effet d'un rayonnement ionisant, le matériau scintillateur présentant un deuxième indice de réfraction. Le dispositif comporte une couche de guidage en contact avec au moins une partie de la paroi, la couche de guidage guidant vers une zone prédéterminée les photons générés par le matériau scintillateur et ayant un angle d'incidence par rapport à la partie de la paroi supérieur ou égal à l'arcsinus du rapport du premier indice de réfraction sur le deuxième indice de réfraction.

Suivant des modes de réalisation particuliers, le procédé comprend une ou plusieurs des caractéristiques suivantes, prise(s) isolément ou suivant toutes les combinaisons techniquement possibles :
- le matériau de la couche de guidage présente un troisième indice de réfraction, le troisième indice de réfraction étant supérieur aux premier et deuxième indices de réfraction.
- la couche de guidage comporte au moins un élément diffractant adapté à diriger des photons selon une direction prédéterminée.
- au moins un parmi le ou les éléments diffractants est agencé pour injecter des photons générés par le matériau scintillateur vers la couche de guidage.
- au moins un parmi le ou les éléments diffractants est agencé pour extraire les photons guidés par la couche de guidage hors de la couche de guidage.
- le dispositif comprend une zone centrale et une zone périphérique, la zone prédéterminée étant la zone périphérique et les éléments diffractants étant situés dans la zone périphérique.
- le dispositif comprend un détecteur comportant plusieurs photodétecteurs, certains des photodétecteurs étant situés dans la zone centrale et d'autres photodétecteurs étant situés dans la zone périphérique.
- les éléments diffractants sont choisis dans un groupe constitué d'un cristal photonique et d'une surface ayant une rugosité comprise entre 10 nanomètres et 2,0 micromètres.
- la couche de guidage entoure entièrement la paroi.
- le matériau scintillateur est un parallélépipède rectangle dont les arêtes présentent un chanfrein.

Il est également proposé un dispositif de caractérisation d'un rayonnement émis par une source d'émission sensiblement isotrope utilisé dans un milieu ambiant. Le milieu ambiant présente un premier indice de réfraction. Le dispositif comprend :
- une source lumineuse d'émission sensiblement isotrope délimitée par une paroi, la source générant des photons et la paroi étant dans un matériau présentant un deuxième indice de réfraction, et
- une couche de guidage en contact avec au moins une partie de la paroi, la couche de guidage guidant vers une zone prédéterminée les photons générés par la source et ayant un angle d'incidence par rapport à la partie de la paroi supérieure ou égal à l'arcsinus du rapport du premier indice de réfraction sur le deuxième indice de réfraction.

Suivant des modes de réalisation particuliers, le dispositif de caractérisation d'un rayonnement émis par une source d'émission lambertienne comprend une ou plusieurs des caractéristiques suivantes, prise(s) isolément ou suivant toutes les combinaisons techniquement possibles :
- la source lumineuse est générée par l'absorption d'un rayonnement ionisant.
- la source lumineuse est un scintillateur propre à absorber un rayonnement ionisant.
- le matériau de la couche de guidage présente un troisième indice de réfraction, le troisième indice de réfraction étant supérieur aux premier et deuxième indices de réfraction.
- la couche de guidage comporte au moins un élément diffractant adapté à diriger des photons selon une direction prédéterminée.
- au moins un parmi le ou les éléments diffractants est agencé pour injecter des photons générés par la source lumineuse d'émission sensiblement isotrope vers la couche de guidage.
- au moins un parmi le ou les éléments diffractants est agencé pour extraire les photons guidés par la couche de guidage hors de la couche de guidage.
- le dispositif comprend une zone centrale et une zone périphérique, la zone prédéterminée étant la zone périphérique et les éléments diffractants étant situés dans la zone périphérique.
- le dispositif comprend un détecteur comportant plusieurs photodétecteurs, certains des photodétecteurs étant situés dans la zone centrale et d'autres photodétecteurs étant situés dans la zone périphérique.
- les éléments diffractants sont choisis dans un groupe constitué d'un cristal photonique et d'une surface ayant une rugosité comprise entre 10 nanomètres et 2,0 micromètres.
- la couche de guidage entoure entièrement la paroi.
- la source lumineuse d'émission sensiblement isotrope est un parallélépipède rectangle dont les arêtes présentent un chanfrein.

L'invention concerne aussi un procédé de fabrication d'un dispositif tel que décrit précédemment, comprenant les étapes de dépôt chimique en phase vapeur de la couche de guidage sur la paroi du matériau scintillateur et de lithographie des éléments diffractants, notamment par nanoimpression sur un film déposé sur la couche de guidage.

L'invention concerne aussi une utilisation d'un dispositif tel que précédemment décrit pour la caractérisation d'un rayonnement ionisant.

Suivant des modes de réalisation particuliers, l'utilisation comprend une ou plusieurs des caractéristiques suivantes, prise(s) isolément ou suivant toutes les combinaisons techniquement possibles :
- la caractérisation comporte la détermination de l'énergie du rayonnement ionisant.
- la caractérisation comporte la détermination du point d'interaction entre le rayonnement ionisant et le matériau scintillateur.

D'autres caractéristiques et avantages de l'invention apparaîtront à la lecture de la description détaillée qui suit de modes de réalisation de l'invention, donnée à titre d'exemple uniquement et en référence aux dessins qui sont :
- figure 1, une vue schématique en coupe du dispositif selon un mode de réalisation l'invention ;
- figure 2, une vue schématique en coupe du dispositif selon un autre mode de réalisation l'invention ;
- figure 3, une vue schématique en coupe du dispositif selon encore un autre mode de réalisation l'invention ;
- figure 4, une vue schématique en coupe du dispositif selon encore un autre mode de réalisation l'invention ;
- figure 5, une vue schématique en coupe selon l'axe V de la figure 6 d'un exemple cristal photonique ;
- figure 6, une vue schématique en élévation de l'exemple de cristal photonique ;
- figure 7, un graphique présentant le couplage simulé d'une onde lumineuse dans la couche de guidage selon l'invention en fonction de l'angle d'incidence et de la longueur d'onde, la couche de guidage étant munie d'un cristal photonique selon une première géométrie ;
- figure 8, un graphique présentant le couplage simulé d'une onde lumineuse dans la couche de guidage selon l'invention en fonction de l'angle d'incidence et de la longueur d'onde, la couche de guidage étant munie d'un cristal photonique selon une deuxième géométrie ;
- figure 9, une cartographie du champ électrique produit par un rayonnement ionisant dans un scintillateur ;
- figure 10, une cartographie du champ magnétique produit par un rayonnement ionisant dans un scintillateur ;
- figure 11, un graphique présentant l'évolution du signal détecté par plusieurs détecteurs dans l'exemple des figures 9 et 10 en fonction du temps ;
- figure 12 à 14 illustrent différentes étapes d'un exemple de fabrication de cristaux photonique sur une couche de guidage d'un matériau scintillateur.

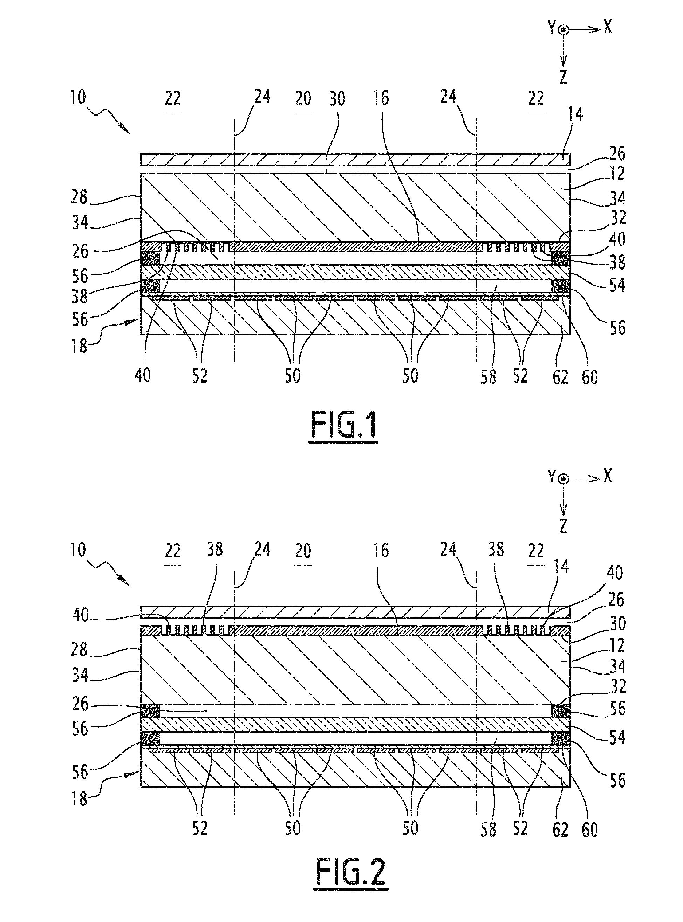

Un dispositif 10 de caractérisation d'un rayonnement ionisant est présenté à la figure 1.

Le dispositif 10 de caractérisation se présente sous la forme d'un composant multicouche, chaque couche étant agencée l'une en dessous de l'autre.

Dans cet agencement multicouche, le dispositif 10 comporte un matériau scintillateur 12. Dans la suite, il est considéré que le rayonnement ionisant est absorbé par le matériau scintillateur 12. Cette interaction génère quelques centaines à plusieurs milliers de photons.

Le dispositif 10 comprend aussi un rétroréflecteur 14, une couche de guidage 16 et un détecteur 18. Dans l'exemple de la figure 1, le détecteur 18 permet de définir deux axes transversaux X et Y. L'axe X est dans le plan de la figure tandis que l'axe Y est perpendiculaire au plan de la figure. Il est également défini un axe Z perpendiculaire aux deux axes X et Y, l'axe Z étant orienté depuis le matériau scintillateur 12 vers le détecteur 18.

En outre, le dispositif 10 présente une zone centrale 20 et une zone périphérique 22. La délimitation entre la zone centrale 20 et la zone périphérique 22 est matérialisée sur la figure 1 par des traits 24 en pointillés.

Le dispositif 10 de caractérisation est utilisé dans un milieu ambiant 26 présentant un premier indice de réfraction n₁. Typiquement, le milieu ambiant 26 est de l'air. Dans ce cas, le premier indice de réfraction n₁ est de l'ordre de 1,0.

Le matériau scintillateur 12 est un matériau monolithique. Autrement dit, le matériau scintillateur 12 est du type « bulk ». Cette terminologie anglaise signifie que le matériau est massif.

En variante, le matériau scintillateur 12 est une succession de scintillateurs monolithiques assemblés.

Dans le cas de la figure 1, le dispositif 10 comprend un matériau scintillateur 12 délimité par une paroi 28. La paroi 28 est une paroi externe au matériau scintillateur 12.

Selon l'exemple de la figure 1, le matériau scintillateur 12 forme un parallélépipède rectangle.

Ainsi, il est défini pour le matériau scintillateur 12 une face avant 30 et une face arrière 32, les deux faces étant perpendiculaires à l'axe Z et s'étendant le long d'une direction parallèle à l'axe X. En outre, le matériau comporte également des faces latérales 34 s'étendant le long d'une direction parallèle à l'axe Z.

La face avant 30 forme un rectangle ayant une longueur (selon une direction parallèle à l'axe X) et une largeur (selon une direction parallèle à l'axe Y). La longueur est comprise entre quelques centaines de micromètres et plusieurs dizaines de centimètres, et est notamment égale à cinq centimètres. La largueur est comprise entre quelques centaines de micromètres et plusieurs dizaines de centimètres, et est notamment égale à cinq centimètres.

L'épaisseur du matériau scintillateur 12 définie comme la distance entre les faces avant et arrière est comprise entre cinq millimètres et quatre centimètres, et est notamment égale à un centimètre.

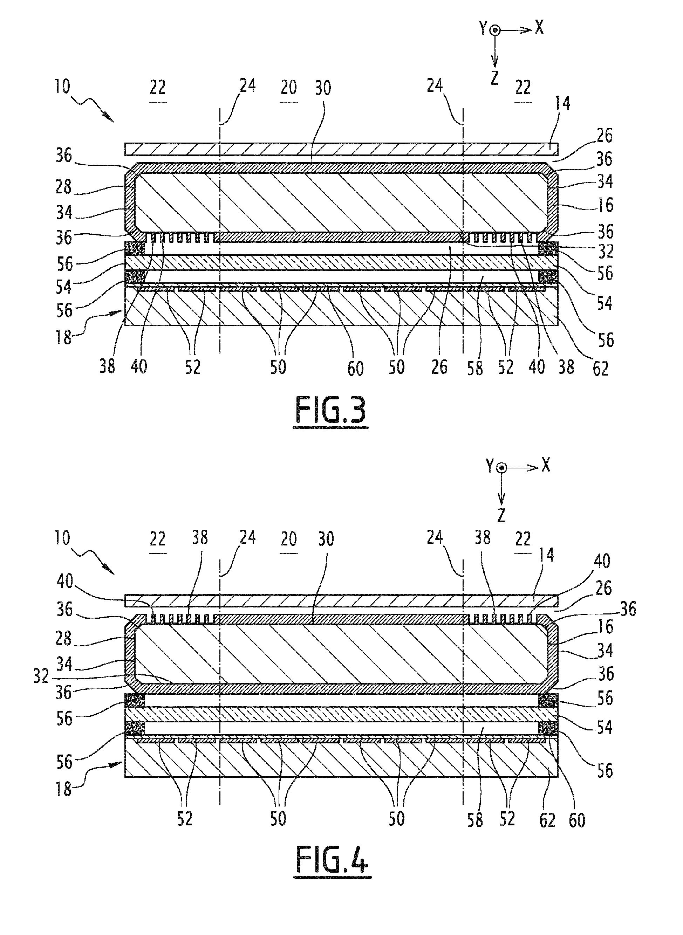

Dans les exemples des figures 3 et 4, les arêtes du matériau scintillateur 12 présentent un chanfrein 36. Cela permet de favoriser le guidage de la lumière dans la couche de guidage 16.

Les chanfreins 36 représentés aux figures 3 et 4 s'étendent suivant une direction parallèle à l'axe Y.

Le matériau scintillateur 12 génère des photons lorsque le rayonnement ionisant interagit dans ce dernier.

Le matériau scintillateur 12 est propre à émettre entre quelques centaines et plusieurs dizaines de milliers de photons par événement ionisant. Plus précisément, la quantité de photons générés dans le matériau scintillateur 12 dépend de l'énergie déposée par le rayonnement ionisant au cours de l'interaction, le plus souvent selon une relation de proportionnalité.

A titre d'exemple, le matériau scintillateur 12 est réalisé en un cristal de silicates de lutécium et d'yttrium dopés au cérium. Un tel cristal est généralement dénommé Ce : LYSO où LYSO représente la formule chimique LU Lu₂₍₁₋ₓ₎Y₂ₓSiO₅ où x est un nombre compris entre 0 et 1. Pour le cristal utilisé dans le cadre de cette invention, x est choisi égal à 0,2. Dans ce cas, le matériau scintillateur 12, est propre à émettre 13500 photons pour un rayonnement gamma à 511 keV pour un matériau scintillateur LYSO.

Le spectre d'émission d'un matériau scintillateur est assez large bande dans la mesure où le spectre s'étend généralement sur plusieurs centaines de nanomètres (nm). Ainsi, les photons générés par le matériau scintillateur 12 ont une longueur d'onde comprise entre 350 nm et 800 nm, de préférence entre 380 nm et 600 nm.

En outre, l'émission des photons générés se fait au premier ordre sans direction privilégiée selon un angle solide de 4Π. En ce sens, le matériau scintillateur 12 se comporte comme une source de lumière sensiblement isotrope.

De ce fait, le dispositif de caractérisation 10 est utilisable pour caractériser une source lumineuse sensiblement isotrope en remplaçant le matériau scintillateur 12 par un matériau à émission sensiblement isotrope. De préférence, ce matériau est adapté à générer des photons sous l'effet d'une excitation. Ainsi, la caractérisation de la source isotrope permet de déterminer les propriétés de l'excitation.

Le matériau scintillateur 12 présente un deuxième indice de réfraction n₂, Le deuxième indice de réfraction n₂ est supérieur au premier indice de réfraction n₁. A titre d'exemple, le deuxième indice de réfraction n₂ est égal à 1,8.

La couche de guidage 16 est propre à guider vers une zone prédéterminée certains des photons générés par le matériau scintillateur 12.

Selon les exemples illustrés, la zone prédéterminée est la zone périphérique 22.

Les photons guidés sont les photons qui ont un angle d'incidence par rapport à la partie de la paroi 28 supérieur ou égal à l'arcsinus du rapport du premier indice de réfraction n₁ sur le deuxième indice de réfraction n₂. Par angle d'incidence par rapport à un élément, on entend dans toute la suite que l'angle d'incidence est défini par rapport à la normale locale de l'élément.

D'après les lois de Snell-Descartes, les photons guidés sont donc des photons qui sont totalement réfléchis à l'interface entre un milieu ayant comme indice de réfraction n₂ et un milieu ayant comme indice le premier indice de réfraction n₁.

Dans l'exemple de la figure 1, la couche de guidage 16 présente un troisième indice de réfraction n₃ qui est avantageusement supérieur à la fois au deuxième indice de réfraction n₂ et au premier indice de réfraction n₁. Par exemple, le troisième indice de réfraction n₃ est égal à 2.

Les différents indices de réfraction n₁, n₂ et n₃ sont différents deux à deux.

De plus, selon une variante, la couche de guidage 16 présente un gradient d'indice. Dans ce cas, l'indice de réfraction n₃ correspond à l'indice moyen de la couche de guidage 16.

En outre, la couche de guidage 16 de la figure 1 est en contact avec la paroi 28 de la face arrière 32 du matériau scintillateur 12.

Selon le mode de réalisation de la figure 2, la couche de guidage 16 est en contact avec la face avant 30 du matériau scintillateur 12.

En variante, la couche de guidage 16 entoure entièrement la paroi 28. La couche de guidage 16 est ainsi en contact avec la face avant 30, la face arrière 32 et les faces latérales 34. Cela est notamment visible aux modes de réalisation des figures 3 et 4.

Ainsi, la couche de guidage 16, le milieu ambiant 26 et le matériau scintillateur 12 forment un guide d'onde.

En variante, le guide d'onde est formé par le matériau scintillateur 12 d'un coté et une couche mixte de l'autre coté. La couche mixte comporte de l'air dans la zone périphérique 22 et un matériau d'indice intermédiaire entre l'indice de l'air et le troisième indice n₃ dans la zone centrale 20.

Ce guide d'onde est fortement multimode pour augmenter la collection de photons. Cela implique que l'épaisseur de la couche de guidage 16 est suffisamment grande pour permettre la propagation de plusieurs modes. Une épaisseur d'au moins 1 micromètre est avantageusement désirée pour la couche de guidage 16.

En variante, une couche de confinement optique est positionnée autour de la couche de guidage 16. Cette couche de confinement optique présente un indice de réfraction inférieur au troisième indice de réfraction n₃.

La couche de confinement optique permet de protéger la couche de guidage 16 et favorise le maniement et la fixation de l'ensemble formé par le matériau scintillateur 12 et la couche de guidage 16.

Dans chacun des modes de réalisation illustrés aux figures 1 à 4, la couche de guidage 16 comporte au moins un élément diffractant 38. Ces éléments diffractants 38 sont optiquement couplés à la couche de guidage 16. Le terme « optiquement couplé » réfère, dans le cadre de cette invention, au fait que les éléments diffractants 38 et la couche de guidage 16 sont en communication optique. Autrement dit, les éléments diffractants 38 captent au moins quelques-uns des photons guidés dans la couche de guidage 16.

Selon les exemples illustrés, les éléments diffractants 38 sont situés dans la zone périphérique 22. Cette zone est avantageusement choisie pour sa proximité du matériau scintillateur 12 où les photons émis sont réfléchis et donc perdent l'information spatiale.

Chaque élément diffractant 38 est adapté à diriger des photons selon une direction formant un angle d'incidence par rapport à la paroi 28. Cela permet notamment de diriger des photons vers le détecteur ou une partie spécifique de celui-ci.

Selon les exemples illustrés, les éléments diffractants 38 sont propres à diriger les photons selon la direction Z.

Les éléments diffractants 38 des figures 1 à 4 sont des cristaux photoniques 40 gravés dans la couche de guidage 16.

Selon une variante non représentée, le cristal photonique 40 est accolé à la couche de guidage 16 et formé par une couche ayant un indice effectif inférieur au troisième indice n₃ dans laquelle des trous sont pratiqués dans un matériau d'indice différent.

La géométrie des cristaux photoniques 40 est choisie pour que la lumière émise soit diffractée perpendiculairement aux guides d'ondes.

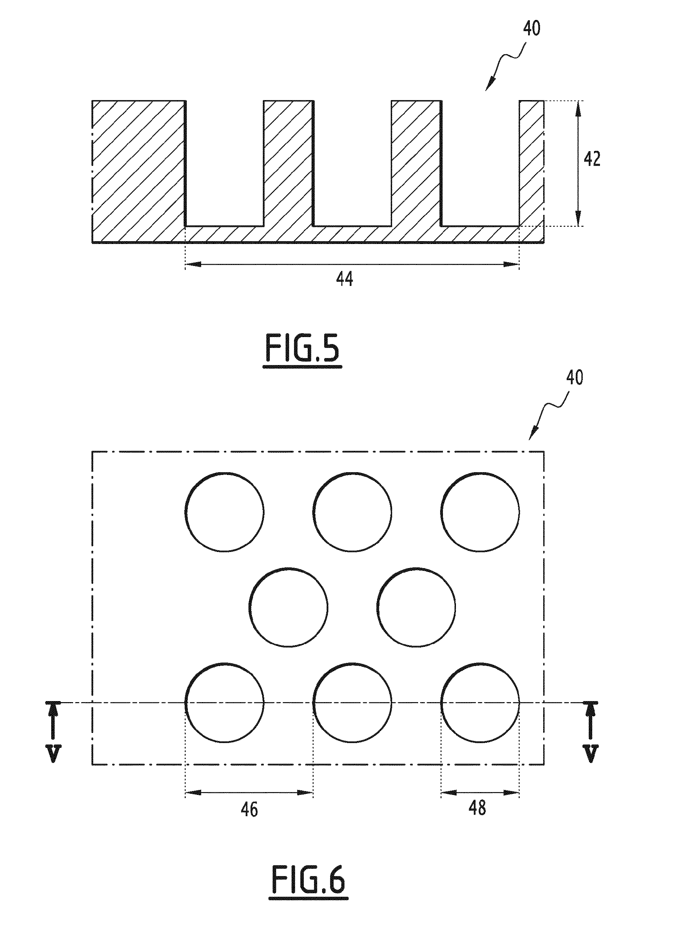

La géométrie d'un cristal photonique 40 est caractérisée par plusieurs paramètres ainsi que le montrent les figures 5 et 6. Un cristal photonique est une nanostructure dans laquelle un motif est répété. Ici, le motif comprend un trou borgne de profondeur 42. Le motif est répété sur une extension 44 limitée. Les motifs sont répétés avec un pas régulier 46. Dans le cas représenté, il est également précisé la taille du diamètre 48 des trous.

Le cristal photonique 40 est dans le matériau de la couche de guidage 16 tandis que les trous sont dans le matériau du milieu ambiant 26.

La profondeur 42 est comprise entre quelques dizaines de nanomètres et quelques micromètres, et est notamment égale à 500 nanomètres.

L'extension 44 est comprise entre quelques centaines de nanomètres et quelques dizaines de micromètres, et est notamment égale à 2,3 micromètres. Le pas 46 est compris entre quelques centaines de nanomètres et quelques micromètres nanomètres, et est notamment égal à 330 nanomètres.

Le diamètre 48 est, par exemple, caractérisé par le taux de remplissage défini comme le ratio de l'aire totale occupée par les trous sur l'aire totale occupée par la couche de guidage 16. Le taux de remplissage est compris entre 0,1 et 0,9, et est notamment égal à 0,5.

Les trous borgnes sont disposés, par exemple, en quinconce.

Le choix précis des différentes valeurs pour la profondeur 42, l'extension 44, le pas 46 et le diamètre 48 est réalisé selon une procédure connue de l'homme du métier en fixant un taux de remplissage et en imposant de fonctionner dans la première zone de Brillouin pour un vecteur d'onde nul (point souvent appelé point Gamma).

Ainsi, la direction d'émission des photons par le cristal photonique 40 est peu dépendante de la longueur d'onde d'émission. Cette propriété rend les cristaux photoniques 40 bien adaptés pour diriger les photons selon une direction donnée.

En outre, l'émission des cristaux photoniques 40 est sensiblement anisotrope, ce qui accroît encore cet effet.

Selon un autre mode de réalisation, la géométrie du cristal photonique est en nid d'abeille, hexagonale ou même aléatoire.

En variante, les éléments diffractants 38 sont une surface présentant une rugosité comprise entre 10 nm et 2,0 micromètres (µm). La rugosité est définie, dans le cadre de cette invention, comme la variance de la rugosité de la surface mesurée par exemple par microscopie à force atomique (rugosité quadratique moyenne dite RMS selon l'acronyme anglais associé).

Les éléments diffractants 38 présentent l'avantage d'être peu encombrants. Lorsque l'encombrement n'est pas critique, d'autres moyens permettent d'extraire les photons vers la zone périphérique 22. A titre d'exemple, une structure de type coin de cube ou une structure guidante ayant la forme d'un entonnoir permet une extraction locale de la lumière.

Dans les modes de réalisation des figures 1 et 4, les cristaux photoniques 40 sont agencés dans la zone périphérique 22 pour extraire les photons guidés par la couche de guidage 16 hors de la couche de guidage 16.

En variante, les éléments diffractants 38 sont agencés pour injecter des photons générés par le matériau scintillateur 12 vers la couche de guidage 16. Les éléments diffractants 38 servent alors de coupleurs de lumière dans le guide d'onde entourant le matériau scintillateur 12.

Les éléments diffractants 38 sont alors avantageusement placés dans la zone périphérique 22. En outre, les éléments diffractants 38 sont, selon cette variante, de petites tailles. Pour un cristal photonique 40, cela signifie que sa longueur 44 est de quelques dizaines de fois le pas 46.

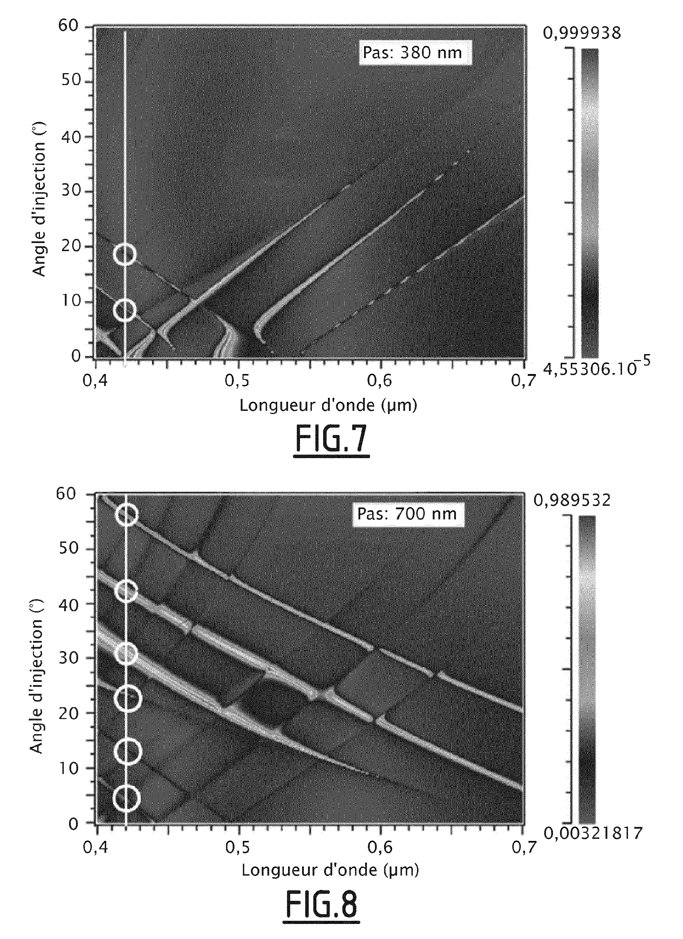

Les figures 7 et 8 présentent ainsi, pour deux géométries de cristal photonique 40, le couplage simulé dans la couche de guidage 16 d'une onde plane lumineuse en fonction de la longueur d'onde dans le vide de l'onde lumineuse et de l'angle d'injection. L'angle d'injection est défini par l'angle d'incidence de l'onde plane par rapport à la normale de la couche de guidage 16.

Une valeur de 1 (blanc) correspond à 100% de couplage de l'onde lumineuse dans la couche de guidage 16. Une valeur de 0 (noir) correspond à 0% de couplage de l'onde lumineuse dans la couche de guidage 16. Le trait blanc correspond au pic d'émission du matériau scintillateur 12 soit environ 420 nm. Les cercles montrent visuellement les angles d'injection se couplant dans la couche de guidage 16.

Les simulations ont été effectuées en utilisant la méthode de calcul d'analyse rigoureuse des ondes couplées aussi appelée sous l'acronyme RCWA pour « rigourous coupled wave analysis ».

Dans le cas de la figure 7, le pas 46 du cristal photonique est de 380 nm avec un taux de remplissage de 0,5, une profondeur 500 nm et une extension 44 égale à 3,8 micromètres. Le cristal photonique de la figure 8 présente un pas 46 de 700 nm avec un taux de remplissage de 0,5, une profondeur 42 de 500 nm et une extension 44 égale à 7 micromètres.

Pour la figure 7, seules les ondes ayant une longueur d'onde de 420 nm avec un angle d'injection respectif de 8,5° et 17,5° sont couplées efficacement dans la couche de guidage 16.

Dans le cas de la figure 8, les ondes ayant une longueur d'onde de 420 nm avec un angle d'injection respectif de 56º, 43º, 32º, 25º, 13º, 4º se couplent efficacement dans la couche de guidage 16. Ceci est particulièrement vrai pour les ondes avec les angles de 56º, 43º, et 32º. Les autres angles d'incidence ne sont pas couplés et sont soit transmis vers l'extérieur ou réfléchis vers le matériau scintillateur 12.

Ainsi, ces simulations montrent qu'un cristal photonique 40 est propre à accroître la collecte de photons par la couche de guidage 16. En outre, plus le pas 46 du cristal photonique 40 est grand, plus il est possible de coupler de la lumière émise à plusieurs angles dans la couche de guidage 16.

Le détecteur 18 comporte plusieurs photodétecteurs 50 et 52. Un photodétecteur 50, 52 convertit l'énergie des photons en signal électrique.

Les photodétecteurs 50, 52 permettent de détecter un faible nombre de photons. De ce fait, chaque photodétecteur 50, 52 présente une bonne efficacité quantique. A titre d'exemple, l'efficacité quantique est supérieure à 25 % à 420 nm, supérieure à 45 % à 600 nm et supérieure à 15 % à 800 nm. Par exemple, l'efficacité quantique vaut 30 % à 420 nm, 60% à 600 nm et 20% à 800 nm.

Il en résulte que le détecteur 18 présente une bonne sensibilité, soit un bon rapport du nombre de photons lumineux détectés par rapport au nombre de photons incidents sur le détecteur 18.

Selon ce mode de réalisation, les photodétecteurs 50, 52 sont, par exemple, une matrice de SPAD acronyme anglais pour « Single Photon Avalanche Photodiode ») c'est-à-dire des photodiodes à avalanche utilisées en mode Geiger comme détecteur 18 de photon unique. Les photodétecteurs 50, 52 forment ainsi un photomultiplieur à base de silicium (aussi désigné par l'acronyme SPIM pour Silicon Photomultipliers)

En variante, les photodétecteurs 50, 52 sont des photodiodes en silicium monocristallin ou amorphe ou des photodiodes à avalanche (aussi désignés par l'acronyme APD pour « avalanche photodiode »).

Une partie des photodétecteurs 50 est située dans la zone centrale 20 alors que les autres photodétecteurs 52 sont situés dans la zone périphérique 22.

Selon une variante, les photodétecteurs 50 présentent une meilleure efficacité quantique que celle des photodétecteurs 52.

A titre d'exemple, le détecteur 18 proposé est obtenu par une technologie dite TSV pour « Through-silicon via ».

Selon cette technologie, une lame 54 de verre (souvent nommée verre TSV) transparente dans le visible protège les photodétecteurs 50, 52. Cette lame 54 est reliée par un adhésif 56 aux photodétecteurs 50, 52. L'adhésif est par exemple de la colle. L'indice de cet adhésif est avantageusement inférieur au troisième indice n₃.

L'espace 58 entre la colle 56 et les photodétecteurs 50, 52 est rempli de l'air ou un matériau dit d'adaptation d'indice. On entend par un matériau d'adaptation d'indice un matériau présentant un indice compris entre celui du verre et celui des photodétecteurs 50, 52.

Les photodétecteurs 50 et 52 sont en face avant protégés par une première couche 60 en oxyde de silicum ou en nitrure de silicium et en face arrière par une deuxième couche 62 en silicium.

Le rétroréflecteur 14 permet de réfléchir les photons générés par le matériau scintillateur 12. Cela favorise le rendement de collecte du détecteur 18.

Le rétroréflecteur 14 étant positionné en regard de la face avant 30 du matériau scintillateur 12, ce sont les photons sortant de la face avant 30 qui sont réfléchis.

Le rétroréflecteur 14 est séparé du matériau scintillateur 12 par le milieu ambiant 26. En variante, il est accolé au matériau scintillateur 12.

Le rétroréflecteur 14 est composé de coins de cubes. En variante, le rétroflecteur 14 est un miroir ou une couche peinte en blanc.

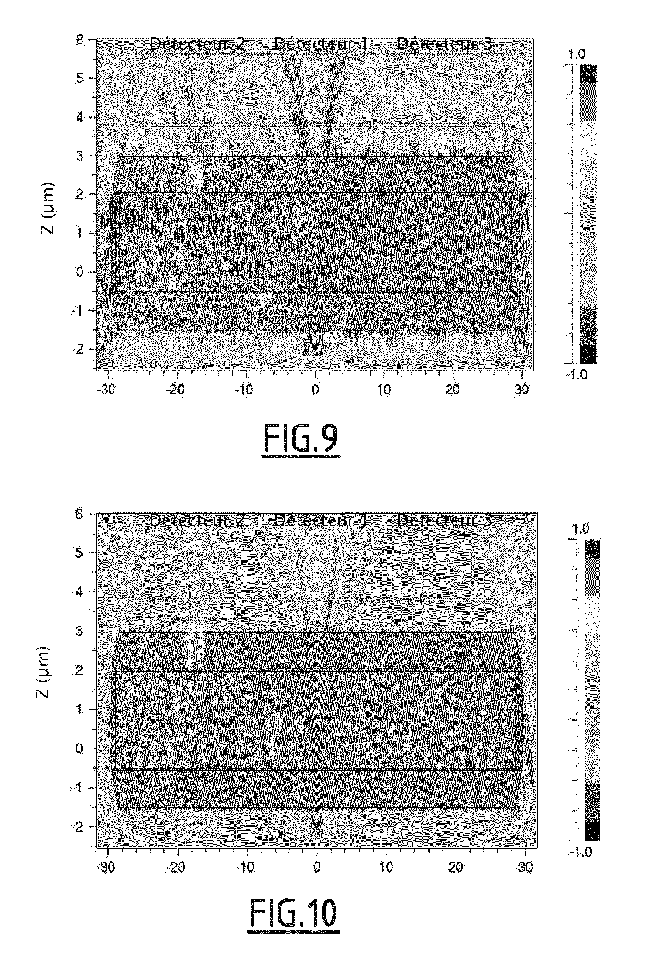

Les figures 9 et 10 représentent respectivement les cartographies du vecteur électrique selon une direction parallèle à l'axe X et du vecteur champ magnétique selon une direction parallèle à l'axe Y. Ainsi, cette figure caractérise l'intensité du rayonnement électromagnétique. Il s'agit de résultats de simulation. La simulation est une simulation des champs électromagnétiques générés par un rayonnement ionisant dans un matériau scintillateur 12. La simulation est obtenue par utilisation de la méthode des différences finies dans le domaine temporel, méthode de calcul dite FDTD (acronyme anglais de « Finite Difference Time Domain »). Pour réduire le temps de calcul, les dimensions du matériau scintillateur 12 ont été réduites d'un facteur d'échelle.

Dans ces figures 9 et 10, trois détecteurs ont été positionnés. Le premier détecteur D1 détecte les photons émis en face de l'évènement. Le deuxième détecteur D2 détecte des photons émis par l'interaction qui sont émis par le cristal photonique 40 tandis que le troisième détecteur D3 détecte les photons émis par l'interaction qui sortent du matériau scintillateur 12. Le troisième détecteur D3 est placé en regard d'une zone ne contenant pas de cristaux photoniques. En outre, le troisième détecteur D3 est symétrique du deuxième détecteur D2 par rapport au premier détecteur D1.

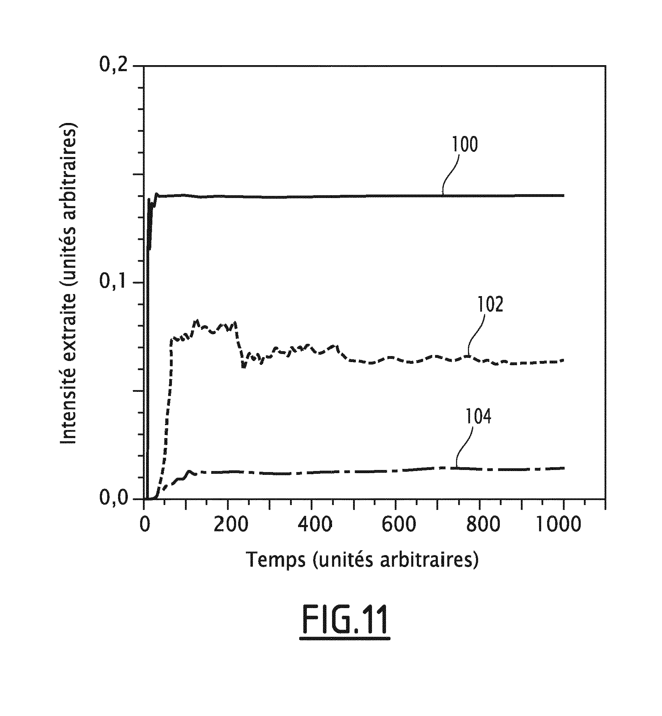

L'amélioration d'extraction est obtenue par comparaison entre le signal reçu par le deuxième détecteur D2 et celui reçu par le troisième détecteur D3. Cette comparaison est effectuée à l'aide de la figure 11 qui représente la puissance du champ électromagnétique détecté par chaque détecteur D1, D2 et D3 en fonction du temps de simulation (en unités arbitraires). La courbe 100 en trait plein représente l'évolution mesurée pour le premier détecteur D1 ; la courbe 102 en traits pointillés représente celle du deuxième détecteur D2 et la courbe 104 en traits mixtes celle du troisième détecteur D3.

En comparant les deux courbes, en régime stabilisé, il est constaté un gain de 35,7%.

L'augmentation de l'efficacité de collection du dispositif 10 est notamment intéressante pour des applications de tomographie à émission de positrons.

En fonctionnement, le dispositif 10 reçoit un rayonnement ionisant. Sous l'effet du rayonnement ionisant, le matériau scintillateur 12 émet des photons.

Les photons émis par le matériau scintillateur 12 lors de l'interaction avec le rayonnement ionisant suivent des chemins différents selon leur incidence par rapport à la paroi 28.

Un photon émis par le matériau scintillateur 12 émis selon une direction sensiblement perpendiculaire à la face arrière 32 traverse cette dernière sans déviation significative. Il est détecté par un photodétecteur 50 situé dans la zone centrale 20. Ce photon est donc un photon rejoignant directement le photodétecteur 50 sans subir de réflexion totale. De ce fait, ce photon est un photon permettant la localisation de l'interaction entre le rayonnement ionisant et le matériau scintillateur 12.

Un photon généré par le matériau scintillateur 12 selon une direction formant un angle d'incidence supérieure à l'arcsinus du rapport du premier indice de réfraction n₁ sur le deuxième indice de réfraction n₂ est collecté par la couche de guidage 16 vers la zone périphérique 22. C'est notamment le cas des photons émis vers les faces latérales 34. Un élément diffractant 38 permet l'extraction du photon guidé vers un photodétecteur 52 situé dans la zone périphérique 22. Ce photon a subi de multiples réflexions totales. Il a donc perdu l'information relative à la localisation de l'interaction entre le rayonnement ionisant et le matériau scintillateur 12. Le photon est, toutefois, utilisable pour améliorer la résolution en énergie du détecteur 18.

Ainsi, le dispositif 10 permet de séparer les photons gardant l'information du point d'interaction de l'absorption d'un rayonnement ionisant des photons qui ont perdu cette information. En outre, le dispositif 10 permet la détection de ces photons sur des zones dédiées du détecteur 18.

De ce fait, le dispositif 10 est bien adapté pour la caractérisation du rayonnement ionisant incident.

Dans l'exemple de l'invention, cette caractérisation comporte la détermination de l'intensité du rayonnement ionisant et celle du point d'interaction entre le rayonnement ionisant et le matériau scintillateur 12.

Le dispositif 10 permet donc d'améliorer l'extraction des photons ayant perdu l'information sur le point d'interaction sur des zones de détection dédiées.

Le dispositif 10 permet également d'améliorer la résolution en énergie, ce qui permet d'améliorer la discrimination entre événements.

En outre, la sensibilité de détection aux rayonnements ionisant est améliorée puisque le rapport signal à bruit des photons détectés est augmenté.

En outre, le dispositif 10 est de fabrication aisée et peu onéreuse. Cela est notamment dû au fait que le dispositif 10 comprend un matériau scintillateur 12 massif. Un matériau scintillateur 12 massif est plus facile à fabriquer qu'un matériau scintillateur « pixélisé ». Un tel matériau pixélisé est notamment utilisé dans le document WO-A-2010/109344 précité.

Pour illustrer cette fabrication aisée, il est également proposé un procédé de fabrication du dispositif 10.

Le procédé de fabrication du dispositif 10 comprend une étape de préparation du matériau scintillateur 12. Cette étape de préparation comprend la réalisation éventuelle de chanfreins 36 aux arêtes du matériau scintillateur 12.

Le procédé comprend également une étape de dépôt de la couche de guidage 16 autour de la paroi 28 du matériau scintillateur 12. Selon un mode de réalisation, le dépôt mis en oeuvre est un dépôt chimique en phase vapeur. Par exemple, un dépôt par LPCVD (acronyme anglais de « Low-pressure chemical vapor deposition ») de nitrure de silicium (formule NSi) est utilisé.

En variante, d'autres techniques de dépôt comme les techniques de dépôt sur de grande surface de sol-gel sont utilisées. Cela est particulièrement adapté pour de l'oxyde d'hafnium (formule chimique HFO₂).

Ainsi, l'étape de dépôt est une étape aisée à mettre en oeuvre parce que les techniques proposées sont des techniques maîtrisées par l'homme du métier. En outre, du fait que la couche de guidage 16 permet le guidage de plusieurs modes, la tolérance de fabrication sur l'épaisseur est importante : plus d'une dizaine de pourcents.

Le procédé comprend également une étape de lithographie des éléments diffractants 38.

Pour les cristaux photoniques 40, par exemple, une technique de nanoimpression est particulièrement adaptée à la fabrication de cristaux photoniques 40 pour améliorer l'extraction de la lumière de films de polymères.

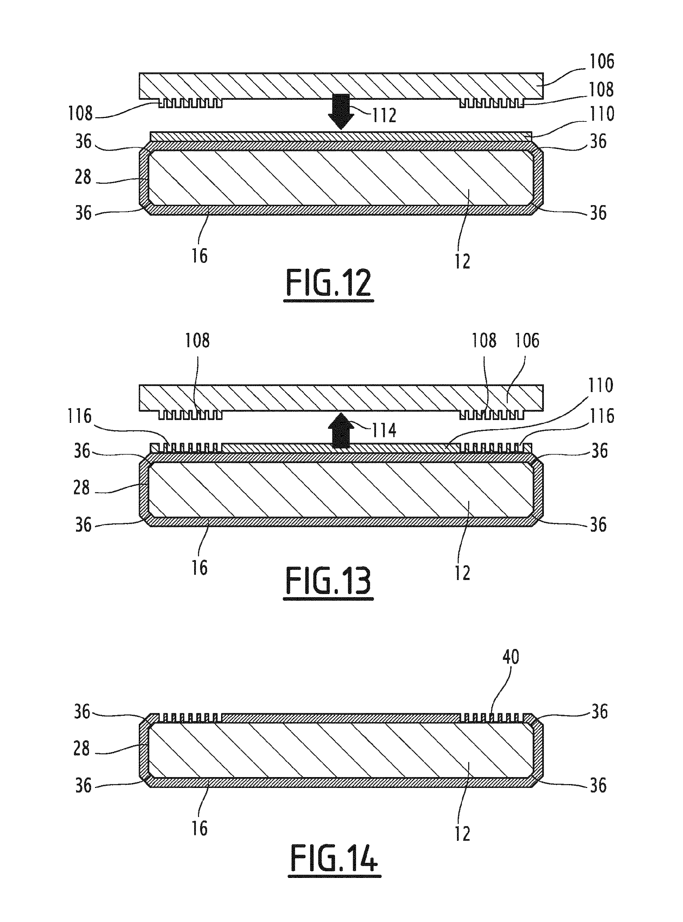

Les figures 12 à 14 illustrent un exemple de fabrication de cristaux photoniques 40 par nanoimpression.

Le procédé comporte une étape de préparation d'un moule 106 en silicium.

La préparation du moule 106 comprend le traitement du moule 106 avec une couche antiadhésive. A titre d'illustration, la couche antiadhésive est une monocouche de molécules contenant des atomes fluorés.

La préparation du moule 106 comprend la réalisation de structurations 108. Les structurations 108 forment un négatif du cristal photonique 40. Dans ce cas, les structurations 108 sont donc des saillies par rapport au moule 106. Ce moule 106 est visible à la figure 12.

Le procédé comporte également une étape de dépôt d'un film 110 de polymère thermoplastique sur la surface de la couche de guidage 16 devant comprendre les cristaux photoniques 40. A titre d'exemple, le film 110 thermoplastique est du polyméthacrylate de méthyle (souvent abrégé en PMMA). En variante, le film 110 déposé à cette étape est un film thermodurcissable ou durcissable sou l'effet d'un rayonnement ultraviolet.

Sur la figure 12, l'ensemble du matériau scintillateur 12 muni de la couche de guidage 16 et du film 110 thermoplastique obtenu à l'issue de l'étape de dépôt est représenté.

Le procédé comporte une étape de chauffage du moule 106 et de l'ensemble à une température supérieure à la température de transition vitreuse du polymère thermoplastique. La température de transition vitreuse est généralement notée Tg en référence à sa dénomination anglaise de « glass transition temperature ». La température atteinte lors de cette étape de chauffage est typiquement 20°C à 50°C au-dessus la température de transition vitreuse Tg.

A cette température, le moule 106 est pressé contre le film 110 de polymère ainsi qu'indiqué par la flèche 112 sur la figure 12. La pression exercée sur le moule 106 varie entre quelques bars et 40 bars.

Puis, le procédé comporte une étape de refroidissement du moule 106 et de l'ensemble à une température inférieure à la température de transition vitreuse Tg.

Le procédé comprend une étape de séparation du moule avec l'ensemble ainsi que l'indique la flèche 114 de la figure 13.

Un ensemble du matériau scintillateur 12 muni de la couche de guidage 16 et du film 110 thermoplastique obtenu à la fin de l'étape de séparation est représenté sur la figure 13. Le film 110 comporte alors des structures 116 sous la forme de trous correspondant aux structurations 108 du moule 106. Ainsi, le film 110 constitue un masque de gravure permettant d'obtenir des cristaux photoniques 40 sur la couche de guidage 16.

Le procédé comporte alors une étape de gravure sèche pour transférer les structures 116 réalisées sur le film 110 thermoplastique sur la couche de guidage 16.

En supprimant le film 110, un ensemble matériau scintillateur 12 entouré par la couche de guidage 16 avec cristaux photoniques 40 est obtenu. Cela est représenté à la figure 14.

En variante de la technique de nanoimpression, pour réaliser les éléments diffractants 38, d'autres techniques usuelles de lithographie, telles la photolithographie ou la gravure par bombardement électronique ou par envoi de rayons ultraviolet, sont utilisées. Selon les cas, ces techniques sont associées à des techniques de gravure sèche ou non.

Le procédé comporte enfin une étape d'assemblage de l'ensemble au détecteur 18.

## Revendications

1. Dispositif (10) de caractérisation d'un rayonnement ionisant utilisé dans un milieu ambiant présentant un premier indice de réfraction (n₁), le dispositif (10) comprenant :
- un matériau scintillateur (12) délimité par une paroi (28), le matériau scintillateur (12) générant des photons sous l'effet d'un rayonnement ionisant, le matériau scintillateur (12) présentant un deuxième indice de réfraction (n₂), et
- une couche de guidage (16) en contact avec au moins une partie de la paroi (28), la couche de guidage (16) guidant vers une zone prédéterminée les photons générés par le matériau scintillateur (12) et ayant un angle d'incidence par rapport à la partie de la paroi (28) supérieur ou égal à l'arcsinus du rapport du premier indice de réfraction (n₁) sur le deuxième indice de réfraction (n₂), le matériau de la couche de guidage (16) présentant un troisième indice de réfraction (n₃), le troisième indice de réfraction (n₃) étant supérieur aux premier et deuxième indices de réfraction (n₁, n₂), et la couche de guidage (16) comportant au moins un élément diffractant (38) adapté à diriger des photons selon une direction prédéterminée.

2. Dispositif selon la revendication 1, dans lequel au moins un parmi le ou les éléments diffractants (38) est agencé pour injecter des photons générés par le matériau scintillateur (12) vers la couche de guidage (16).

3. Dispositif selon la revendication 1 ou 2, dans lequel au moins un parmi le ou les éléments diffractants (38) est agencé pour extraire les photons guidés par la couche de guidage (16) hors de la couche de guidage (16).

4. Dispositif selon l'une quelconque des revendications 1 à 3, dans lequel le dispositif (10) comprend une zone centrale (20) et une zone périphérique (22), la zone prédéterminée étant la zone périphérique (22) et les éléments diffractants (38) étant situés dans la zone périphérique (22).

5. Dispositif selon la revendication 4, dans lequel le dispositif (10) comprend un détecteur (18) comportant plusieurs photodétecteurs (50, 52), certains des photodétecteurs (50) étant situés dans la zone centrale (20) et d'autres photodétecteurs (52) étant situés dans la zone périphérique (22).

6. Dispositif selon l'une quelconque des revendications 1 à 5, dans lequel les éléments diffractants (38) sont choisis dans un groupe constitué d'un cristal photonique (40) et d'une surface ayant une rugosité comprise entre 10 nanomètres et 2,0 micromètres.

7. Dispositif selon l'une quelconque des revendications 1 à 6, dans lequel la couche de guidage (16) entoure entièrement la paroi (28).

8. Dispositif selon l'une quelconque des revendications 1 à 7, dans lequel le matériau scintillateur (12) est un parallélépipède rectangle dont les arêtes présentent un chanfrein (36).

9. Procédé de fabrication d'un dispositif (10) selon l'une quelconque des revendications 1 à 8, comprenant les étapes de :
- dépôt chimique en phase vapeur de la couche de guidage (16) sur la paroi (28) du matériau scintillateur (12),
- lithographie des éléments diffractants (38), notamment par nanoimpression sur un film déposé sur la couche de guidage (16).

10. Utilisation d'un dispositif (10) selon l'une quelconque des revendications 1 à 8 pour la caractérisation d'un rayonnement ionisant.

11. Utilisation selon la revendication 10, dans laquelle la caractérisation comporte la détermination de l'énergie du rayonnement ionisant.

12. Utilisation selon la revendication 10 ou 11, dans laquelle la caractérisation comporte la détermination du point d'interaction entre le rayonnement ionisant et le matériau scintillateur (12).
